# EUROPEAN PATENT SPECIFICATION

(11) **EP 1 263 291 B1**
(45) Date of publication and mention of the grant of the patent: **19.04.2006**
(21) Application number: 00968142.0
(22) Date of filing: 18.10.2000
(51) Int. Cl.: A21D 13/08, A21B 5/08

(54) **METHOD FOR A NEW DOUGHNUT**
VERFAHREN ZUR HERSTELLUNG EINES NEUEN KRAPFENS
PROCEDE DE PREPARATION D'UN NOUVEAU BEIGNET

(30) Priority: 07.03.2000 GB 0005340
(43) Date of publication of application: 11.12.2002
(73) Proprietor: Donuts & Company Limited, Chelsea, London SW3 2ND (GB)
(72) Inventor: HUTCHINSON, Jeffrey, Chelsea, London SW3 2ND (GB)
(74) Representative: Evans, Claire
(86) International application number: PCT/GB2000/003998
(87) International publication number: WO 2001/065945

(56) References cited:
- GB-A- 2 015 315
- US-A- 4 175 483
- US-A- 4 293 572
- DATABASE WPI Section Ch, Week 198419 Derwent Publications Ltd., London, GB; Class D11, AN 1984-117380 XP002157195 & JP 59 055140 A (DENMARK KK), 3 March 1984 (1984-03-03)
- DATABASE FSTA [Online] INTERNATIONAL FOOD INFORMATION SERVICE (IFIS), FRANFURT/MAIN, DE; 83-4-08-e0491, MORRIS, C. E.: "Low-fat fried foods at 40% less energy cost" XP002157194 & FOOD ENGINEERING, vol. 53, no. 11, 1981, pages 146-147, Albany, N.Y., US

## Description

The invention relates to a new process and apparatus for preparing a doughnut. In particular, the invention relates to a method of making a yeast-raised doughnut. There are two general types of doughnut, cake doughnuts made from a mix with baking powder which produce a heavy dense product, and yeast raised doughnuts which are lighter and more spongy. Cake doughnuts are generally ring doughnuts whereas yeast raised doughnuts are generally filled products.

Presently, yeast raised doughnuts or donuts are made by frying. The process generally comprises the following steps:
1. Mixing a dough mixture - containing, for example, wheat flour, dextrose, vegetable oil, salt, raising agents, emulsifiers, defatted Soya flour, whey powder, milk protein, skimmed milk powder, stabilisers, flavourings, colour and flour treatment agents - with yeast and water;
2. Dividing into equal portions and allowing to ferment for up to 45 minutes during which time the dough rises to typically double in size;
3. Kneading the dough either by machine or by hand so as to remove excess air;
4. Sheeting the dough, shrinking and cutting into doughnut shapes;
5. The doughnut shapes are transferred to a proofing room where heat and humidity are added for up to 45 minutes; in this specification a reference to 'proving' is to the addition of heat and humidity. A reference to a proven product shall be interpreted accordingly;
6. The doughnuts, now double in size are allowed to stand for up to 15minutes creating a skin on the external surface of the doughnut;
7. The doughnuts are then fried for about 1.5 minutes or less in shortening at about 185°F; and
8. After cooling the doughnuts are filled or iced or both.

Doughnuts, in common with most fried foods are seen as being high in fat and not suitable for a healthy diet. There is a growing demand for health foods of all sorts including low fat equivalents of high fat foods.

An object of the present invention is to provide a method of making a yeast raised doughnut which does not require a frying step in its manufacture but which has the taste and texture of a fried yeast raised doughnut. The object is satisfied by the baked doughnut of the present invention. The present invention allows baking a product which is normally fried whilst retaining the flavour and texture of the original fried product.

The idea of baking a doughnut is, in some sense counterintuitive because, the skilled man would expect the baking of a doughnut to produce a bread like substance.

In JP-A-03-127941, there is disclosed a method of manufacturing foodstuffs by baking whilst giving a flavour of fats or oils, i.e. a fried taste. In particular an example describes a method of making a 'doughnut'. However, the object of the invention is to give a fried taste to a food stuff that is not generally fried or for dough mixtures which can not withstand the frying process. The Japanese document discloses: mixing a dough mixture of flour, yeast, sugar, eggs and seasoning with water; injecting the mixture in an automatic injector to form doughnut rings which are soft and deformable; pre-treating the bases at 100°C on a net conveyor in an oven; spraying hot fat at 180°C and baking at 190°C. According to the disclosure when a similar doughnut mix was fried it did not survive the frying process. The product of the process according to the Japan document is a very heavy, dense cake product which could not have been fried.

GB 2015315 discloses a new moisture barrier applied to a fried doughnut.

WO-A-98/30105 discloses a glaze applied to a dough product which is to be frozen and in particular, a pizza. The glaze is applied to the dough product which is to be baked before freezing. The glaze consists of water, oil and a hydrophilic colloid. Doughnuts are mentioned but no details are given with regard to a process for making a baked doughnut. In particular, there is no disclosure of a yeast raised doughnut which is prepared freshly. Instead it is clear that the process is generally applicable to bread based products. The skilled man would assume that the process would either produce a product with a bread like texture or that the product relates to a cake doughnut and not a yeast raised doughnut. There is no disclosure of a proven dough mixture coated with fat and then baked to produce a doughnut. There is no suggestion of baking a dough mixture that is normally fried.

In a first aspect, the invention provides a method of manufacturing a doughnut, comprising two spraying steps in which a proven yeast dough mixture product is coated with cooking fat, and an intervening baking step.

The fat is preferably coated onto the dough mixture in a spraying step. In an embodiment there are two spraying steps and an intervening baking step. In at least one spraying step, each doughnut may be sprayed with between 2 and 12g of fat, preferably 3 to 9g, most preferably 3 to 6g. In an embodiment there are two spraying steps in which 4 to 5g of fat are coated onto the doughnuts.

The method may comprise one or more of, a mixing step, one or more cooling steps, and a finishing step.

In a preferred embodiment the step of baking includes at least one application of steam. The application of steam may comprise steaming for approximately 3 seconds at the beginning of the baking step. The application of steam may comprise steaming for 1 second in each subsequent minute.

In a second aspect the invention provides a baked yeast raised doughnut.

The invention will now be described in more detail by way of illustration only with reference to an example and to the accompanying drawing.

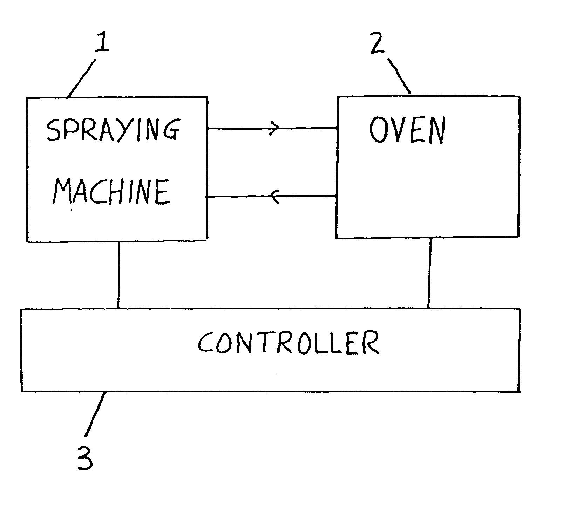

Figure 1 is a box diagram representing the apparatus used in the process according to the invention.

### EXAMPLE

A yeast raised dough mixture is mixed with yeast and water. The proportion of water will depend on the prevailing conditions and are well known to those skilled in the art. The dough Mixture contains wheat flour, dextrose, vegetable oil, salt, raising agents, emulsifiers, defatted Soya flour, whey powder, milk protein, skimmed milk powder, stabilisers, flavourings, colour and flour treatment agents. In a mixing step the dough mixture is mixed with yeast and water.

The mixing step is identical to that of a fried doughnut and in this example a spiral mixer was used for 2 minutes at a slow speed and 8 to 10 minutes at a high speed. The final dough temperature was 21-24°C (70-75°F).

After the mixing step the dough is left for a period of 30 to 40 minutes bulk fermentation time during which time the dough rises, typically doubling in size. Once the dough has ripened the dough is subjected to processing by a pastry break as in the prior art fried doughnut process.

In the next process step, which is also in common with the prior art process, the dough is kneaded mechanically and then transferred to a first travelling table for shrinking where the tension is taken out of the dough to prevent shrinking of the product during subsequent processing. Then the dough is passed to a second travelling table (the cutting table) where the dough passes under a sharp roller for cutting into the required shape. The cutting roller is either a shell cutter or a ring cutter depending on the type of doughnut being made, that is, a ring or filled doughnut. The process step is not equivalent to the injection process used for cake doughnuts.

The shaped dough portions are then subjected to a proving step at 40-43°C (105 to 110 °F) for 30 to 50 minutes with 55 to 60% relative humidity and left to cool for approximately 10 minutes. The proving step has the effect of increasing moisture content. The cooling step allows the surface to skin over and helps prevent excessive absorption of shortening in a spraying step described below.

The above steps are entirely in accordance with a particular prior art process, known to the inventor, for making a yeast raised fried doughnut and may be varied in accordance with any such prior art process. Process conditions and times may be varied depending on the starting mixture or process equipment for example.

Referring to the drawing and in accordance with an embodiment, the doughnut portions were taken from the cold proof rack and sprayed in a spraying machine 1 with approximately 4g of shortening for each doughnut portion. In the present example, a solid vegetable shortening was used. The solid shortening is preferable because it tends to produce a less greasy final product. A DISCMASTER DN4 TH spraying machine supplied by Case (UK) Ltd was used to evenly coat the surface of the doughnuts with shortening. The doughnut portions were loaded into a spinning disk of the spraying machine 1 and the spray tank was filled with heated solid vegetable shortening, specifically in this case 100% palm oil. The shortening was heated sufficiently only to melt the fat. The fat should not be hot enough to initiate any cooking of the dough. The temperature of the fat should be below 100°C and preferably below 65°C.

After spraying the doughnut portions were transferred to a baking rack and to an oven 2 where they were baked at 235°C for 4.5 to 6 minutes. The oven used was equipped with a steam system and was controlled by a controller 3 so as to supply 3 seconds of steam at the beginning of the first minute and 1 second of steam at the beginning of each subsequent minute. The oven used was capable of providing 4.51 of steam per 20 seconds of baking. Suitable ovens include those provided by Revent International of Sweden, such as the Revent double rack 626 or 620. Again the oven operates under the control of a computer program so as to properly control the temperature, timing, steam application and airflow. Figure 1 shows a single controller 3. The oven and spraying machine may have separate controllers.

The baked doughnut portions are removed from the oven and passed through the shortening spray machine 1 in a similar manner to the pre-baking spraying step. The post baking spraying step should be carried out within 3 minutes of removal from the oven and preferably within 1 minute. Again the doughnut portions were each coated with approximately 4g of shortening. The amount of fat coated in each of the spraying steps may be varied and may be different in each step. However, the total amount of fat coated should not exceed 12g per doughnut.

After coating the baked doughnuts were left on cold racks to cool and finished in an entirely standard manner. The various options for coating or filling doughnuts are well known to those skilled in the art.

The result is a doughnut which looks and tastes as good as, or better than, a normal fried doughnut. The texture of the baked doughnut is indistinguishable from the prior art fried yeast raised doughnut. More particularly, the fat content can be reduced from about 26 - 38 grams for a fried doughnut to about 8 to 17 grams of fat for the baked doughnut of the present invention. Furthermore, the product is a freshly baked yeast raised doughnut.

The processing conditions are important to prevent the result being a bread-like product. The crucial processing steps, therefore, are the spraying and baking steps which have not previously been used in the production of a doughnut. The post baking spraying of the doughnuts with shortening is due to the migration of the coating during the baking step.

Whilst in the above example specific values may have been used for process conditions, it is apparent that such conditions of times, temperatures, quantities etc. may be varied by the skilled man as necessary. It is admitted that certain conditions are important so as to prevent the dough forming a bread-like product or a cake doughnut rather than a product resembling a fried yeast raised doughnut. However, it is within the capabilities of the skilled man to vary those conditions as necessary without using any inventive skill should adjustments need to be made, for example, for different dough mixtures.

In particular, the baking temperature may be varied depending on the limits of the oven used. For example the baking temperature may be between 170 and 270°C, preferably 200 to 260, more preferably 210 to 250°C, particularly 230°C. Baking time may be varied in accordance with other factors such as the baking temperature and other process conditions. The baking time may be 3 to 12 minutes, preferably 4 to 9 minutes, more preferably 4 to 7 minutes, most preferably 4 to 6 minutes. The amount of fat used in the coating step or steps may be varied between 2 to 12g, preferably 3 to 9g, more preferably 3 to 7, most preferably 4 to 6g or 4 to 5g.

The baking parameters are selected such that the dough is properly cooked, browned and so that it retains sufficient moisture.

Whilst the invention has been described with reference to a particular example, modifications may be made by the skilled man without departing from the scope of the invention as defined in the appended claims.

## Claims

1. A method of manufacturing a doughnut, comprising two spraying steps in which a proven yeast dough mixture product is coated with cooking fat, and an intervening baking step.

2. A method of manufacturing a doughnut as claimed in claim 1, wherein the cooking fat is a vegetable shortening.

3. A method of manufacturing a doughnut as claimed in claim 1 or 2, wherein the cooking fat is a solid fat.

4. A method of as claimed in any one previous claim wherein in at least one spraying step, each doughnut is sprayed with between 3 and 9 grams of fat.

5. A method as claimed in claim 4, wherein each doughnut is sprayed with between 4 and 6 grams of fat in said at least one spraying step.

6. A method as claimed in any one previous claim, wherein the step of baking includes at least one application of steam.

7. A method as claimed in claim 6, wherein the application of steam is performed for 3 seconds at the start of the baking step.

8. A method as claimed in claim 7, wherein there is further appplication of steam for 1 second per minute.

9. A method as claimed in any previous claim and comprising one or more of, a mixing step, a retarding or proving step, one or more cooling steps, and a finishing step.

10. A baked yeast raised doughnut having taste and texture of a fried yeast raised doughnut producible by the method according to any one of claims 1 to 9.

## Revendications

1. Procédé de préparation d'un beignet, comprenant deux étapes de pulvérisation, au cours desquelles un produit de mélange de pâte levée à la levure est enduit d'une graisse à frire, et une étape de cuisson intermédiaire.

2. Procédé de préparation d'un beignet selon la revendication 1, dans lequel la graisse à frire est constituée par une matière grasse végétale.

3. Procédé de préparation d'un beignet selon les revendications 1 ou 2, dans lequel la graisse à frire est constituée par une matière grasse solide.

4. Procédé selon l'une quelconque des revendications précédentes, dans lequel chaque beignet est pulvérisé avec une quantité de graisse comprise entre 3 et 9 grammes au cours d'au moins une étape de pulvérisation.

5. Procédé selon la revendication 4, dans lequel chaque beignet est pulvérisé avec une quantité de graisse comprise entre 4 et 6 grammes au cours de ladite au moins une étape de pulvérisation.

6. Procédé selon l'une quelconque des revendications précédentes, dans lequel l'étape de cuisson englobe au moins une application de vapeur.

7. Procédé selon la revendication 6, dans lequel l'application de vapeur est effectuée pendant 3 secondes lors du démarrage de l'étape de cuisson.

8. Procédé selon la revendication 7, comprenant l'étape d'une application ultérieure de vapeur pendant 1 seconde par minute.

9. Procédé selon l'une quelconque des revendications précédentes, et comprenant un ou plusieurs des étapes ci-dessous : une étape de mélange, une étape de ralentissement ou de levée, une ou plusieurs étapes de refroidissement et une étape de finition.

10. Beignet à la levure cuit, ayant le goût et la texture d'un beignet à la levure frit, pouvant être préparé par le procédé selon l'une quelconque des revendications 1 à 9.

## Patentansprüche

1. Verfahren zum Herstellen eines Krapfens, das zwei Sprühschritte, in denen ein gegangenes Hefeteigmischungserzeugnis mit Kochfett überzogen wird, und einen dazwischenliegenden Backschritt umfaßt.

2. Verfahren zum Herstellen eines Krapfens nach Anspruch 1, wobei das Kochfett ein pflanzliches Backfett ist.

3. Verfahren zum Herstellen eines Krapfens nach Anspruch 1 oder 2, wobei das Kochfett ein festes Fett ist.

4. Verfahren nach einem der vorhergehenden Ansprüche, wobei in wenigstens einem Sprühschritt jeder Krapfen mit zwischen 3 und 9 Gramm Fett besprüht wird.

5. Verfahren nach Anspruch 4, wobei jeder Krapfen in dem wenigstens einen Sprühschritt mit zwischen 4 und 6 Gramm Fett besprüht wird.

6. Verfahren nach einem der vorhergehenden Ansprüche, wobei der Schritt des Backens wenigstens eine Anwendung von Dampf einschließt.

7. Verfahren nach Anspruch 6, wobei die Anwendung von Dampf für 3 Sekunden am Beginn des Backschritts ausgeführt wird.

8. Verfahren nach Anspruch 7, wobei es eine weitere Anwendung von Dampf für 1 Sekunde pro Minute gibt.

9. Verfahren nach einem der vorhergehenden Ansprüche und das einen oder mehrere der folgenden Schritte umfaßt: einen Mischschritt, einen Verzögerungs- oder Gehschritt, einen oder mehrere Abkühlungsschritte und einen Zurichtungsschritt.

10. Gebackener hefegetriebener Krapfen, der den Geschmack und die Textur eines fritierten hefegetriebenen Krapfens hat und durch das Verfahren nach einem der Ansprüche 1 bis 9 herstellbar ist.
